(19) **Europäisches Patentamt**
**European Patent Office**
**Office européen des brevets**

(11) **EP 2 500 513 B1**

(12) **FASCICULE DE BREVET EUROPEEN**

(45) Date de publication et mention
de la délivrance du brevet:
**18.01.2017 Bulletin 2017/03**

(51) Int Cl.:
***E21B 47/10*** *(2012.01)* ***E21B 41/00*** *(2006.01)*

(21) Numéro de dépôt: **12290058.2**

(22) Date de dépôt: **16.02.2012**

(54) **PROCÉDÉ DE STOCKAGE GÉOLOGIQUE DE GAZ PAR ANALYSES GÉOCHIMIQUES DE GAZ RARES**

VERFAHREN ZUR GEOLOGISCHEN LAGERUNG VON GAS DURCH GEOCHEMISCHE ANALYSEN VON SELTENEN GASEN

METHOD FOR GEOLOGICAL STORAGE OF GAS BY GEOCHEMICAL ANALYSIS OF NOBLE GASES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.03.2011 FR 1100760**

(43) Date de publication de la demande:
**19.09.2012 Bulletin 2012/38**

(73) Titulaire: **IFP Énergies nouvelles**
**92852 Rueil-Malmaison Cedex (FR)**

(72) Inventeurs:
• **Rouchon, Virgile**
**92210 Saint-Cloud (FR)**
• **Estublier, Audrey**
**78590 Noisy-le-Roi (FR)**
• **Garcia, Bruno**
**92500 Rueil-Malmaison (FR)**

(56) Documents cités:
**WO-A1-2010/049608**

• **GREGORY J NIMZA ET AL: "The Use of Noble Gas Isotopes for Monitoring Leakage of Geologically Stored CO2", 1 janvier 2005 (2005-01-01), GEOLOGIC STORAGE OF CARBON DIOXIDE WITH MONITORING AND VERIFICATION, ELSEVIER, AMSTERDAM, PAGE(S) 1113 - 1128, XP008107303, ISBN: 978-0-08-044572-4 [extrait le 2007-09-18] * figure 3; tableau 2 * * le document en entier ***
• **ROUCHON V ET AL: "The relationship between CO2 flux and gas composition in soils above an EOR-CO2 oil field (Brazil): a guideline for the surveillance of CO2 storage sites", INTERNET CITATION, 22 septembre 2010 (2010-09-22), pages 1-20, XP007919587, Extrait de l'Internet: URL:http://www.mendeley.com/research/relat ionship-between-co2-flux-gas-composition-s oils-above-eor-co2-oil-field-brazil-guidel ine-surveillance-co2-storage-sites/**
• **WELLS ET AL: "The use of tracers to assess leakage from the sequestration of CO2 in a depleted oil reservoir, New Mexico, USA", APPLIED GEOCHEMISTRY, PERGAMON, vol. 22, no. 5, 6 mai 2007 (2007-05-06), pages 996-1016, XP022063723, ISSN: 0883-2927, DOI: 10.1016/J.APGEOCHEM.2007.01.002**
• **MACKINTOSH S J ET AL: "The use of noble gases as a tracer in carbon dioxide sequestration", GEOCHIMICA ET COSMOCHIMICA ACTA, PERGAMON PRESS, NEW YORK, NY, US, vol. 70, no. 18, 1 août 2006 (2006-08-01), page A381, XP025236946, ISSN: 0016-7037, DOI: 10.1016/J.GCA.2006.06.770 [extrait le 2006-08-01]**

## Description

L'invention concerne le domaine technique du stockage géologique de gaz, tel que le dioxyde de carbone ($CO_2$) ou le méthane, et plus particulièrement la surveillance de site géologique de stockage de ces gaz.

La présente invention propose notamment un procédé de quantification de la masse de gaz dissoute dans le stockage géologique, basée sur une analyse géochimique in-situ.

Les aquifères salins profonds présentent le plus fort potentiel pour le stockage géologique de gaz parmi toutes les formations géologiques envisagées de part leur répartition géographique et leur capacité de stockage théorique. Les gisements appauvris de gaz et d'huile peuvent aussi servir de stockage de gaz.

Le volume du gaz injecté dans une telle formation géologique souterraine est facilement connu par mesure du débit de gaz en tête de puits. Toutefois, le devenir du gaz une fois injecté est beaucoup plus difficile à maîtriser : ce gaz peut migrer verticalement hors de la formation de stockage (dans des couches géologiques plus superficielles, voire jusqu'en surface) ou latéralement dans la formation hôte dans des zones non prévues initialement. De plus, le gaz injecté peut connaître des modifications bio-physico-chimiques au cours du temps susceptibles d'en modifier la pression dans le réservoir. Ces processus peuvent être la solubilisation, la précipitation, la métabolisation biologique et la réactivité chimique. On appelle « gaz injecté » l'espèce moléculaire à stocker ainsi que les impuretés qu'il contient, dans leur forme gazeuse lors de l'injection. On appelle « espèce à stocker » l'espèce moléculaire que l'on souhaite stocker dans le réservoir géologique, excluant les impuretés contenues dans le gaz injecté.

Un suivi le plus complet possible du devenir du gaz injecté doit être réalisé pour être conforme aux réglementations en vigueur, ainsi que pour aider à l'acceptation sociétale de cette technologie. Ce suivi complet doit impliquer la détection et la quantification de fuites hors de la formation géologique de stockage ainsi qu'un bilan massique de l'espèce à stocker dans la formation géologique de stockage.

Prenons l'exemple du $CO_2$, qui est un gaz ayant une solubilité importante, et pouvant former des minéraux en tant que constituant majeur (les carbonates). De ce fait, le $CO_2$ gazeux à pour vocation à changer de phase, ce qui a pour effet d'en stabiliser le stockage. Le $CO_2$ une fois injecté dans un stockage géologique va se stabiliser à la pression du réservoir (étalement du panache, compensation de la pression par soutirage d'eau de formation, etc...). La diminution de la masse de $CO_2$ en phase gaz (solubilisation, précipitation) sera compensée en pression par l'ajustement du volume de gaz (battement de l'aquifère). Il en résulte que la phase gaz du stockage restera composée en majorité de $CO_2$ (composition relative majeure ~ 100%) et à pression constante. Seul le volume de gaz sera amené à varier. Dans ces conditions, le suivi de la quantité de $CO_2$ ayant quitté la phase gaz par mesure de pression, ou par la teneur en $CO_2$ du gaz, est impossible. De ce fait, des techniques complémentaires doivent être à disposition des entités techniques concernées par le stockage de $CO_2$ pour veiller à son intégrité et à la conformité de son évolution.

Pour suivre l'évolution des fluides injectés au sein d'un milieu poreux, de nombreuses techniques ont été développées par les industriels.

Parmi ces techniques, la sismique répétitive, dite sismique 4D, est utilisée dans l'industrie (pétrolière ou environnementale). Une telle technique consiste à réaliser différentes campagnes sismiques, à des moments différents (en général les campagnes sont espacées d'au moins une année). Ainsi, le spécialiste peut suivre l'évolution des fluides du site géologique de stockage. Ces techniques ont été exploitées dans le domaine environnemental pour estimer, à partir des données sismiques, le volume total et la masse totale de $CO_2$ en place dans le sous-sol.

Cependant, ces méthodes ne permettent pas de suivre le bilan massique du $CO_2$ entre son état gazeux et ses autres états, et donc d'évaluer l'efficacité du stockage.

On connaît également du brevet FR2.827.960 une méthode de suivi quantitatif d'un gaz injecté dans un réservoir susceptible de réagir chimiquement avec le milieu d'injection. Cette méthode consiste à injecter dans le réservoir un mélange du gaz potentiellement réactif à quantifier avec une proportion faible d'un gaz traceur dont l'inertie chimique est totale, et à déterminer la variation au cours du temps de la proportion initiale du gaz réactif qui a pu disparaître par transformation, ceci par une mesure de la variation de concentration du gaz traceur dans le mélange.

Cependant, cette méthode ne permet pas de différencier la quantité de $CO_2$ dissoute et la quantité de $CO_2$ précipitée, et elle ne permet pas d'anticiper une fuite de $CO_2$ au dessus du site de stockage.

L'objet de l'invention concerne un procédé de stockage de gaz, tel que le dioxyde de carbone ($CO_2$) ou le méthane, comportant une phase de surveillance du devenir du gaz, permettant de quantifier la masse de gaz dissoute, éventuellement la quantité de gaz précipitée, et permettant d'anticiper une fuite de ce gaz au dessus du site de stockage. Le procédé se base sur l'ajustement d'un modèle décrivant l'évolution de la concentration en gaz en fonction du temps, au moyen d'analyses géochimique in-situ de gaz rares contenus dans des phases fluides d'échantillons du sous-sol.

## Le procédé selon l'invention

De façon générale, l'objet de l'invention concerne un procédé de stockage géologique d'un gaz contenant une espèce à stocker et au moins un gaz rare, dans lequel on injecte dans une formation du sous-sol ledit gaz. Selon ce procédé, on surveille le devenir de ladite espèce à stocker dans le sous-sol en réalisant les étapes suivantes :

i. on choisit un modèle de diffusion dudit gaz rare et un modèle de diffusion de l'espèce à stocker, chaque modèle décrivant l'évolution de la concentration en fonction du temps, de la profondeur et d'un coefficient de diffusion dudit gaz ;

ii. avant ladite injection, on prélève au moins un premier échantillon d'un fluide présent dans une zone du sous-sol susceptible d'être atteinte par l'espèce à stocker, et l'on mesure une concentration dudit gaz rare au sein dudit premier échantillon ;

iii. après ladite injection, on prélève au moins un second échantillon d'un fluide présent dans ladite zone du sous-sol susceptible d'être atteinte par l'espèce à stocker, et l'on mesure une concentration dudit gaz rare au sein dudit second échantillon ;

iv. on répète l'étape iii, à différents instants ;

v. lorsque ladite concentration dudit gaz rare augmente, on modifie ledit coefficient de diffusion effective du modèle, de façon à ce que le modèle soit cohérent avec lesdites mesures, et on déduit un ratio entre ledit coefficient de diffusion et ledit coefficient de diffusion modifié ;

vi. on applique ce ratio au modèle de diffusion de l'espèce à stocker, à partir duquel on détermine la quantité de l'espèce à stocker dissoute à un instant t.

Selon l'invention, on peut mesurer également une concentration de ladite espèce à stocker au sein dudit second échantillon, et on en déduit une quantité de l'espèce à stocker ayant changé de forme chimique (par réactivité chimique ou par activité biologique) à un instant t par comparaison avec ledit modèle de diffusion de l'espèce à stocker obtenu à l'étape vi.

Selon un mode de réalisation, ladite zone susceptible d'être atteinte par l'espèce à stocker est un aquifère situé au dessus de la formation du sous-sol dans lequel gaz est injecté, et l'on détecte une fuite de l'espèce à stocker hors de la formation d'injection au moyen dudit modèle de diffusion de l'espèce à stocker obtenu à l'étape vi. Selon ce mode de réalisation, on peut détecter la fuite de l'espèce à stocker avant qu'une augmentation de la concentration en l'espèce à stocker dans ledit aquifère ne soit détectable par mesures géochimiques.

Enfin, selon l'invention, l'espèce à stocker peut être du CO2 ou du méthane, et le gaz rare peut être de l'hélium ou de l'argon.

D'autres caractéristiques et avantages du procédé selon l'invention, apparaîtront à la lecture de la description ci-après d'exemples non limitatifs de réalisations, en se référant aux figures annexées et décrites ci-après.

## Présentation succincte des figures

- la figure 1 montre un schéma d'un stockage de $CO_2$ avec transfert par diffusion et modèle de diffusion 1 D vertical.

- la figure 2 illustre des modèles de diffusion de l'hélium (He), de l'argon (Ar) et du $CO_2$ calés au moyen de mesures géochimiques.

- la figure 3 illustre l'amélioration du calage avec des mesures géochimiques ultérieures.

- la figure 4 illustre la courbe de ratio (GR/$CO_2$) de concentration d'un gaz rare et du $CO_2$ dissous tracé en utilisant la solution analytique, ainsi que les mesures réelles du ratio GR/$CO_2$.

- la figure 5 illustre la courbe de concentration du $CO_2$ dissous tracée en utilisant la solution analytique (équation 1) et le ratio calculé, ainsi que les mesures de concentration de $CO_2$.

- la figure 6 illustre le calcul du délai dont on dispose pour agir et remédier à une future fuite de $CO_2$.

## Description détaillée du procédé

Le procédé de stockage géologique de gaz selon l'invention, comporte une phase d'injection dans une formation du sous-sol du gaz contenant essentiellement une espèce à stocker (dioxyde de carbone ($CO_2$), méthane...) et au moins un gaz rare (hélium, argon...), et une phase de surveillance du devenir de l'espèce à stocker dans le sous-sol.

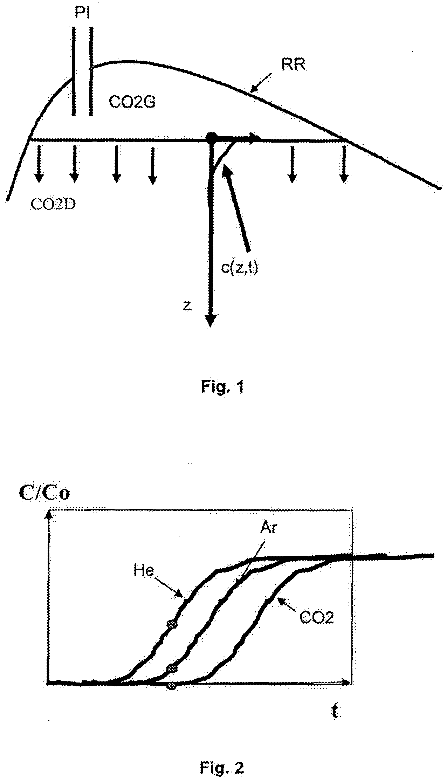

Selon un exemple de réalisation (figure 1), on injecte un gaz contenant essentiellement l'espèce à stocker, du $CO_2$, via un puits injecteur (PI) dans une roche réservoir (RR) d'une formation du sous-sol, le gaz injecté contenant également un gaz rare comme l'hélium. La roche réservoir contenant un fluide, et notamment de l'eàu.

Lorsque le $CO_2$ est injecté, il migre dans la formation dans un premier temps principalement sous forme gaz ($CO_2G$) par gravité et/ou due à un gradient de pression existant, jusqu'à s'immobiliser pour les raisons suivantes : disparition de gradient de pression par écoulement, rétention du gaz résiduelle par capillarité, rétention du gaz de manière structurale.

Une fois la phase gaz stabilisée dans les pores, le panache de $CO_2$ a in fine une grande surface horizontale (L est de l'ordre de quelques kms) par rapport à son épaisseur (e est de l'ordre de quelques mètres à quelques centimètres au bout du panache).

Le second phénomène de migration qui prend le relais est la diffusion avec ou non une instabilité gravitaire. Ce type de migration prend sa source à l'interface gaz/eau (INT), par conséquent dessous le panache de $CO_2$ gaz ($CO_2G$) dans la roche réservoir, mais également au-dessus du panache de $CO_2$ à travers la roche couverture. Sous cette interface, on trouve donc du $CO_2$ sous forme dissoute dans de l'eau ($CO_2D$), et transporté par diffusion vers le bas (flèches sur la figure 1). La diffusion étant isotrope et e/L<<1, on peut étudier le phénomène de diffusion par un modèle 1 D vertical ($c(z,t)$) où la surface de contact eau/gaz constitue la source du constituant dissous dans l'eau.

Le $CO_2$ produit industriellement, et purifié par un procédé de captage, contient des éléments mineurs ou en trace (teneur relatives inférieure à 5%). Parmi ces éléments, nous prendrons l'exemple des gaz rares, toujours présents dans des quantités mesurables. Ces éléments traces ont des propriétés physico-chimique différentes de celles du $CO_2$, et vont donc réagir différemment que ce dernier dans un environnement de stockage géologique. Plus particulièrement, leurs solubilités et leurs réactivités chimiques vont être différentes et spécifiques à chaque espèce. L'évolution de la composition du gaz injecté dans le réservoir géologique va être conditionnée par ces différences, et connaissant celles-ci à priori, ces évolutions de composition permettent de quantifier la masse de $CO_2$ ayant changé de phase ou de forme chimique.

Le procédé se base sur l'utilisation de trois caractéristiques intéressantes des gaz rares par rapport à l'espèce à stocker :

- une diffusion plus rapide en milieu aqueux;

- une détectabilité par les outils de mesure plus basse;

- une inactivité avec leur environnement d'un point de vue chimique et biologique

La surveillance du devenir du $CO_2$ consiste à quantifier 1) la quantité de l'espèce à stocker dissoute dans la formation de stockage, 2) la quantité de $CO_2$ ayant précipitée ou réagit dans cette formation (biologiquement ou physico-chimiquement), et 3) la quantité de $CO_2$ ayant fuit hors de cette formation vers un aquifère supérieur. Ces trois points ci-dessus sont réalisés à partir de mesures de concentration d'au moins un gaz rare et le cas échéant l'espèce a stocker.

Le procédé de surveillance comporte essentiellement les étapes suivantes :

1. Choix de modèles de diffusion d'un gaz rare et de l'espèce à stocker;

2. Mesure de concentration en gaz rare, avant injection ;

3. Mesures de concentration en gaz rare, après injection ;

4. Calage du modèle de diffusion du gaz rare avec les mesures de concentrations ;

5. Mise à jour de modèle de diffusion de l'espèce à stocker, à partir du modèle de diffusion du gaz rare calé ;

6. Détermination de la quantité de l'espèce à stocker dissoute à un instant t à partir du modèle mis à jour.

Ces étapes sont détaillées ci-après pour l'exemple du $CO_2$ en tant qu'espèce à stocker.

1. Choix de modèles de diffusion d'un gaz rare et du $CO_2$ ;

On choisit un modèle de diffusion du gaz rare, l'hélium selon notre exemple, et un modèle de diffusion du $CO_2$. Chaque modèle décrit l'évolution de la concentration en fonction du temps, de la profondeur et d'un coefficient de diffusion propre à l'hélium et au $CO_2$.

On connaît par exemple un modèle 1 D vertical de migration d'un constituant par diffusion, où l'évolution de la concentration (C) du constituant dans l'espace et le temps ($t$) est défini par :

$$C(z,t) = C_0 \, erfc\left(\frac{z}{2\sqrt{Dt}}\right) \qquad \text{Équation 1}$$

avec :

> $z$ : profondeur
>
> $t$ : temps
>
> D : coefficient de diffusion effective du constituant tel que D=Dm*ratio où Dm est le coefficient de diffusion moléculaire du constituant et ratio (initialement égal à la porosité) un paramètre à mettre à jour lors de l'étape 4 du procédé;
>
> $C_0$ : concentration maximale du constituant dissous (He ou $CO_2$), c'est-à-dire la concentration initiale avant injection. Il s'agît de la concentration située à l'interface eau/gaz.

La figure 2 illustre des modèles (courbes) de diffusion de l'hélium (He), de l'argon (Ar) et du $CO_2$ (espèce à stocker).

### 2. Mesure de concentration en gaz rare avant injection

Avant l'injection, on prélève au moins un premier échantillon d'un fluide présent dans une zone du sous-sol susceptible d'être atteinte par le $CO_2$, et l'on mesure la concentration du gaz rare au sein de ce premier échantillon.

Pour réaliser ce prélèvement, on utilise au moins un puits de surveillance dans lequel on immerge un préleveur de fonds permettant de récupérer le fluide (eau) en présence, sans perturber l'équilibre physico-chimique du système.

Ce puits permet de placer le préleveur dans une zone du sous-sol susceptible d'être atteinte par le $CO_2$. Il peut s'agir d'une zone située dans le réservoir où le $CO_2$ est censé être stocké, ou une zone située au dessus, de façon à détecter une fuite par exemple.

On réalise ensuite sur ce premier prélèvement une première mesure, qui caractérise l'état initial du réservoir de stockage avant injection du $CO_2$. On mesure la concentration du gaz rare au sein de ce premier échantillon. On peut également mesurer les concentrations d'autres gaz rares et du $CO_2$ si cela est possible.

Cette étape permet de contraindre les compositions du gaz stocké (éléments sous forme gaz et dissous dans le réservoir), et du réservoir de stockage. La détection précoce de l'He par rapport au $CO_2$ dépend de la différence de composition en He du gaz stocké par rapport à la zone de surveillance (zone du sous-sol susceptible d'être atteinte par le $CO_2$). L'He étant naturellement présent dans les environnements géologiques, d'autant plus s'ils sont profonds, cette différence doit être bien contrainte par l'analyse préliminaire des fluides naturels.

### 3. Mesures de concentration en gaz rare après injection

Avant l'injection, on prélève au moins un second échantillon d'un fluide présent dans la zone du sous-sol susceptible d'être atteinte par le $CO_2$, et l'on mesure la concentration du gaz rare au sein de ce second échantillon.

Pour ce faire on utilise les mêmes moyens que pour l'étape précédente : puits de surveillance et préleveur de fond.

Cette étape est répétée à différents instants, et éventuellement à différents puits de surveillance.

On obtient ainsi un ensemble de valeurs du rapport de la concentration en gaz rare à un instant $t$ après injection, sur la concentration en gaz rare avant injection (un à chaque instant t de prélèvement et mesure).

### 4. Calage du modèle de diffusion du gaz rare avec les mesures de concentrations

Lorsque la concentration du gaz rare (He) augmente, on modifie alors le coefficient de diffusion effective du modèle choisi à l'étape 1, de façon à ce que ce modèle soit cohérent avec les mesures. On en déduit alors le ratio entre le coefficient de diffusion moléculaire et le coefficient de diffusion modifié (Equation 1).

On prend l'hypothèse simple que le ratio est caractéristique du milieu (porosité et tortuosité) uniquement. Si l'on utilise plusieurs gaz rare, on calcule un ratio moyen modulo une erreur.

La figure 2 illustre cette étape de calage de la solution analytique (équation 1) caractérisant l'évolution de la concentration du gaz rare en fonction du temps et de la position du point de mesure, avec les mesures réalisées à l'étape 3. Les points de mesure sont illustrés par des points sur la figure 2. La figure 2 illustre des modèles (courbes) de diffusion de l'hélium (He) et de l'argon (Ar) obtenus en calant la solution analytique (équation 1) sur les points de mesures. Ces deux courbes calées permettent de définir un ratio moyen entre la diffusion moléculaire et la diffusion effective. Ce ratio permet de caler le modèle (courbes) de diffusion du $CO_2$.

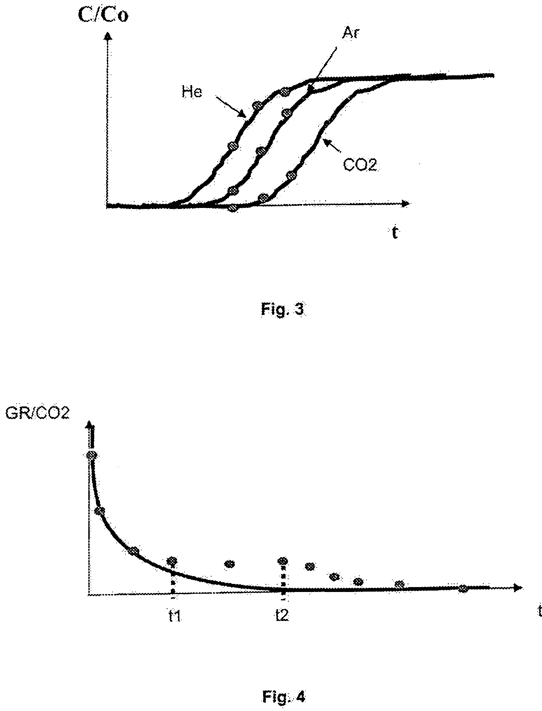

Les mesures effectuées à des dates ultérieures permettent d'affiner les résultats en modifiant le ratio (figure 3).

5. Mise à jour de modèle de diffusion du $CO_2$

Pour mettre à jour le modèle de diffusion du $CO_2$ à partir du modèle de diffusion du gaz rare calé, on applique le ratio au modèle de diffusion du $CO_2$ choisi à l'étape 1.

Pour ce faire, on applique ce ratio à la diffusion moléculaire du $CO_2$ utilisée dans le modèle de diffusion du $CO_2$ choisi à l'étape 1. On obtient une nouvelle diffusion effective du $CO_2$ qui nous permet d'obtenir un nouveau modèle de diffusion du $CO_2$ basé sur le modèle de diffusion du gaz rare qui a été calé sur des données expérimentales à l'étape 4. Cette étape est illustrée sur les figures 2 et 3.

6. Détermination de la quantité de $CO_2$ dissoute à un instant t à partir du modèle mis à jour.

On utilise ensuite le modèle de diffusion du $CO_2$ ainsi mis à jour, pour déterminer la quantité de $CO_2$ dissoute à un instant t.

Par intégration volumique du modèle (équation 1 mise à jour), on en déduit la masse de $CO_2$ dissoute à un instant t :

$$M(t) = 2\phi SM C_0 \sqrt{\frac{Dt}{\pi}} \qquad\qquad \text{Équation 2}$$

avec :

$\phi$ : porosité du milieu ;
S : surface de contact eau/gaz ;
M : masse molaire du $CO_2$.

**Exemple d'application**

Le procédé d'estimation de la masse de $CO_2$ dissous diffusant à partir du panache de $CO_2$ gaz est appliquée au cas suivant, dont les caractéristiques sont regroupées dans le tableau 1 ci-après :

*Tableau 1*

| | | |
|---|---|---|
| Aire du panache de $CO_2$ gaz | 500000 | m2 |
| Epaisseur du panache de $CO_2$ gaz | 10 | m |
| Porosité | 0.2 | |
| Saturation irréductible en eau | 0.3 | |
| Masse volumique du $CO_2$ gaz | 146 | kg/m3 |
| Date | 1000 | ans |
| Concentration max $CO_2$ dissous (source) | 7.60E-05 | mole/cm3 |
| Diffusion moléculaire du $CO_2$ dans l'eau | 2.65E-04 | m2/jour |
| ratio (porosité et tortuosité) | 0.25 | sans dimension |
| **Masse de $CO_2$ dissous diffusant sous le panache de $CO_2$ gaz** | **1.86E+03** | **tons** |

Il s'agit d'un panache de $CO_2$ d'une masse de 102200 tonnes situé à une pression de 60 bars et à une température de 44°C. Au bout de 1000 ans, les résultats de la méthode indiquent que 7% de la masse initiale sont dissous : 3% en équilibre avec la phase gaz et 4% diffusant au-dessus et sous le panache de $CO_2$.

7. Détermination de la quantité de $CO_2$ précipitée à un instant t

Selon un mode de réalisation, il est également possible de déterminer la quantité de $CO_2$ ayant précipitée à un instant t, dès lors que la variation de la concentration du $CO_2$ a atteint son seuil de détectabilité.

Pour ce faire, on mesure également la concentration du $CO_2$ au sein du second échantillon pour différents instants t. Puis en comparant cette valeur de concentration avec le modèle de diffusion du $CO_2$ mis à jour et obtenu à l'étape 5, on détermine la quantité de $CO_2$ ayant précipitée à un instant t par différence.

On considère que le $CO_2$ précipite au taux $\alpha(z,t)$ tel que la concentration de $CO_2$ précipitée en z (z étant la profondeur) à l'instant t est :

$$C_p(z,t) = \alpha(z,t)C(z,t) \qquad\qquad \text{Équation 3}$$

La masse de $CO_2$ sous forme minérale à l'instant t est :

$$M_p(t) = \int_0^{+\infty} \alpha(z,t)\phi SMC_0 \, erfc\left(\frac{z}{2\sqrt{Dt}}\right) dz \qquad\qquad \text{Équation 4}$$

Avec un taux de précipitation moyen suivant z, la masse de $CO_2$ précipitée à l'instant t est

$$M_p(t) = 2\alpha(t)\phi SMC_0 \sqrt{\frac{Dt}{\pi}} \qquad\qquad \text{Équation 5}$$

Avec un taux de précipitation moyen suivant z, la masse de $CO_2$ dissoute diffusant à l'instant t est alors :

$$M_s(t) = 2(1-\alpha(t))\phi SMC_0 \sqrt{\frac{Dt}{\pi}} \qquad\qquad \text{Équation 6}$$

Le procédé comporte alors les étapes suivantes : à partir du moment où on détecte le $CO_2$ dissous, on suit son évolution par des mesures de sa concentration. On continue également de mesurer la concentration des gaz rares dissous. On trace sur un même graphe l'évolution dans le temps du ratio de la concentration d'un gaz rare dissous et du $CO_2$ dissous issue des mesures et celle issue des solutions analytiques obtenues précédemment (figure 4). La figure 4 illustre ainsi la courbe de ratio (GR/$CO_2$) de concentration d'un gaz rare et du $CO_2$ dissous tracé en utilisant la solution analytique, constituant la courbe de référence sans précipitation du $CO_2$. Les points sur la figure 4 représentent les mesures réelles du ratio GR/$CO_2$. On observe qu'en t1, les points de mesure ne respectent plus la courbe. Ceci indique le début de la précipitation du $CO_2$. Le temps t2 correspond à une rupture de pente et indique que le seuil de précipitation est atteint.

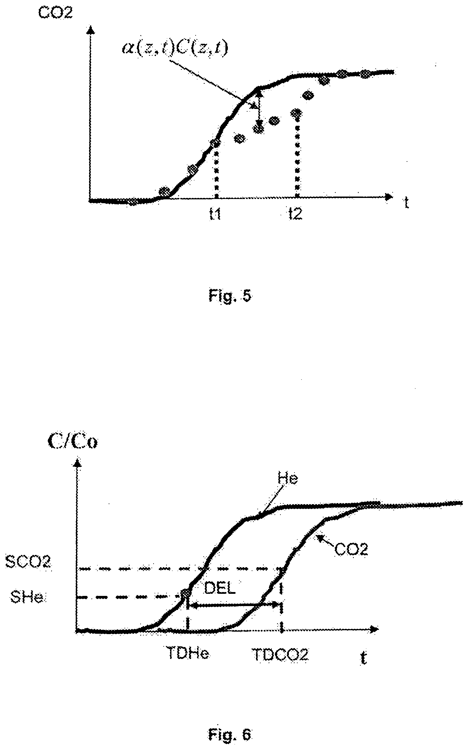

La figure 5 illustre la courbe de concentration du $CO_2$ dissous tracée en utilisant la solution analytique (équation 1) et le ratio calculé précédemment. Les points représentent les mesures de concentration de $CO_2$. La différence entre les points de mesure et la courbe de la solution analytique permet de calculer le taux de précipitation $\alpha(z,t)$. On en déduit la masse de $CO_2$ précipité avec l'équation 4 ou 5 et la masse de $CO_2$ dissous diffusant avec l'équation 6.

On peut également observer à la date t2 (figure 4 et figure 5) une seconde rupture de pente de l'évolution de la concentration du $CO_2$ dissous marquant la fin de la précipitation du $CO_2$, car le seuil de précipitation a été atteint. A partir de ce moment, la masse de $CO_2$ précipité est constante et la masse de $CO_2$ diffusant continue d'augmenter.

On note que plus on a de points de mesures, plus on peut connaitre avec précision $\alpha(z,t)C(z,t)$, donc la masse de $CO_2$ dissous et celle précipitée.

8. Détermination d'une fuite de $CO_2$ vers un aquifère supérieur

Selon un mode de réalisation, il est également possible de déterminer une fuite du $CO_2$ injecté en dehors de la zone de stockage (réservoir). Selon ce procédé, la zone de surveillance, c'est-à-dire la zone dans laquelle on prélève des échantillons au moyen d'un puits de surveillance et d'un préleveur, est un aquifère situé au dessus de la zone du sous-sol dans lequel le $CO_2$ est injecté. On détecte alors une fuite de $CO_2$ hors de la zone d'injection en déterminant la quantité de $CO_2$ dissoute dans cet aquifère (au moyen du modèle de diffusion du $CO_2$ (étape 6 de l'invention).

Ce type de surveillance, au niveau d'un aquifère supérieur permet d'éviter la mise en place d'un puits de surveillance à travers la couverture géologique qui maintient le $CO_2$ injecté dans la zone réservoir. De plus, le phénomène de diffusion est de loin le phénomène prépondérant au sein de la roche couverture, ce qui est d'autant plus intéressant vis-à-vis des gaz rares, et donc du procédé selon l'invention.

Ce procédé permet de quantifier le délai que l'on dispose avant que l'on puisse détecter une fuite de $CO_2$ par des moyens classiques, et mettre en place des protocoles de remédiation et de colmatage de fuite. Elle est basée sur le fait que les gaz rares ont un seuil de détection beaucoup plus bas que le $CO_2$ et qu'ils diffusent aussi plus vite. Le procédé selon l'invention détecte ainsi une fuite de $CO_2$ avant qu'une augmentation de concentration en $CO_2$ dans l'aquifère ne soit détectable par une mesure géochimique.

La figure 6 illustre les modèles (courbes) de diffusion de l'hélium et du $CO_2$ calés sur des mesures. SHe indique le seuil de détection par mesure géochimique d'une augmentation de la concentration en hélium. $SCO_2$ indique le seuil de détection par mesure géochimique d'une augmentation de la concentration en $CO_2$. Ainsi TDHe indique la date à laquelle une augmentation de concentration en hélium est détectable, et $TDCO_2$ indique la date à laquelle une augmentation de concentration en $CO_2$ est détectable. On peut alors calculer le délai (DEL) dont on dispose pour agir et remédier à une future fuite de $CO_2$.

**Exemple d'application**

On considère les trois types de stockage de $CO_2$ existants suivants:

*Tableau 2 : Conditions de température et de pression des sites de stockage*

| Site de stockage | T°C | P (bar) |
|---|---|---|
| SS1 | 44 | 60 |
| SS2 | 95 | 175 |
| SS3 | 150 | 450 |

On considère une source de $CO_2$ injectée dans ces trois types de stockage, dont la composition initiale est la suivante : 97% de $CO_2$, 2% d'azote, 0.5% d'argon et 0.5% d'hélium. La porosité moyenne du milieu est d'environ 25%.

Les seuils de détection pour un instrument de mesure sont définis dans le tableau 3.

*Tableau 3: Seuil de détection pour un instrument de mesure par constituant*

| Constituant | $CO_2$ | hélium | argon | azote |
|---|---|---|---|---|
| Concentration seuil de détection d'un constituant dissous dans l'eau | $10^{-9}$ mole/cm$^3$ | $10^{-13}$ mole/cm$^3$ | $10^{-13}$ mole/cm$^3$ | $10^{-9}$ mole/cm$^3$ |

Les coefficients de diffusion moléculaire des éléments sont constants en fonction de la pression mais sont fonction de la température, tandis que la dissolution est fonction des deux paramètres (tableau 4).

*Tableau 4 : Constantes de diffusion moléculaire et constante de Henry pour les trois sites de stockage*

| Constituant | Diffusion moléculaire dans l'eau (m$^2$/jour) | | | Constante de Henry (Pa) | | |
|---|---|---|---|---|---|---|
| | SS1 | SS2 | SS3 | SS1 | SS2 | SS3 |
| $CO_2$ | 2.65E-04 | 7.40E-04 | 1.69E-03 | 4.086E+08 | 9.5E+08 | 1.3185E+09 |
| hélium | 8.36E-04 | 1.55E-03 | 2.54E-03 | 1.468E+10 | 1.24E+10 | 9.25E+09 |
| argon | 3.80E-04 | 9.53E-04 | 1.99E-03 | 5.3756E+09 | 7.55E+09 | 8.257E+09 |
| azote | 3.15E-04 | 8.78E-04 | 2.01E-03 | 1.1491E+10 | 1.465E+10 | 1.3608E+10 |

Le tableau 5 présente la concentration maximale des constituants $CO_2$, hélium, argon et azote dans les trois cas de stockage SS1, SS2 et SS3.

*Tableau 5 : concentration à saturation dans les trois cas de stockage*

| Constituant | Concentration maximale du constituant dissous (mole/cm³) | | |
|---|---|---|---|
| | SS1 | SS2 | SS3 |
| $CO_2$ | 7.92E-05 | 9.93E-05 | 1.84E-04 |
| hélium | 1.14E-08 | 3.92E-08 | 1.35E-07 |
| argon | 3.10E-08 | 6.44E-08 | 1.51E-07 |
| azote | 5.81 E-08 | 1.33E-07 | 3.68E-07 |

Ces tableaux montrent que :

- le $CO_2$ est le constituant qui se dissout le plus et l'azote et l'hélium, ceux qui se dissolvent le moins. L'ordre de dissolution suivant les constantes de Henry est :

$$CO_2 \ll azote < argon <= hélium$$

- l'hélium est le constituant qui diffuse le plus dans l'eau et le $CO_2$, celui qui diffuse le moins. L'ordre de diffusion est :

$$hélium > argon >= azote > CO_2$$

- la dissolution et la diffusion moléculaire des constituants augmentent avec la profondeur, l'écart de diffusion entre les constituants se réduit avec la température donc avec la profondeur.

On calcule alors un délai disponible (Tav) entre la détection d'un gaz rare et celle du $CO_2$ en fonction de la profondeur (Prof) du site de stockage pour une roche couverture de 5m d'épaisseur. Ces temps d'avance varient entre 1 an et 20 ans. Cet avantage des gaz rares dissous à diffuser plus vite que le $CO_2$ est donc particulièrement intéressant dans le cadre de prédiction de fuite au niveau de surveillance au-dessus de la couverture, en aquifères profonds.

**Revendications**

1. Procédé de stockage géologique d'un gaz contenant une espèce à stocker et au moins un gaz rare, dans lequel on injecte dans une formation du sous-sol ledit gaz, **caractérisé en ce que** l'on surveille le devenir de ladite espèce à stocker dans le sous-sol en réalisant les étapes suivantes :

   i. on choisit un modèle de diffusion dudit gaz rare et un modèle de diffusion de l'espèce à stocker, chaque modèle décrivant l'évolution de la concentration en fonction du temps, de la profondeur et d'un coefficient de diffusion dudit gaz ;
   ii. avant ladite injection, on prélève au moins un premier échantillon d'un fluide présent dans une zone du sous-sol susceptible d'être atteinte par l'espèce à stocker, et l'on mesure une concentration dudit gaz rare au sein dudit premier échantillon ;
   iii. après ladite injection, on prélève au moins un second échantillon d'un fluide présent dans ladite zone du sous-sol susceptible d'être atteinte par l'espèce à stocker, et l'on mesure une concentration dudit gaz rare au sein dudit second échantillon ;
   iv. on répète l'étape iii, à différents instants ;
   v. lorsque ladite concentration dudit gaz rare augmente, on modifie ledit coefficient de diffusion effective du modèle de diffusion du gaz rare, de façon à ce que le modèle soit cohérent avec lesdites mesures, et on déduit un ratio entre ledit coefficient de diffusion et ledit coefficient de diffusion modifié ;
   vi. on applique ce ratio au modèle de diffusion de l'espèce à stocker, à partir duquel on détermine une quantité de l'espèce à stocker dissoute à un instant t.

2. Procédé selon la revendication 1, dans lequel on mesure également une concentration de ladite espèce à stocker au sein dudit second échantillon, et on en déduit une quantité de l'espèce à stocker ayant changé de forme chimique (par réactivité chimique ou par activité biologique) à un instant t par comparaison avec ledit modèle de diffusion de l'espèce à stocker obtenu à l'étape vi.

3. Procédé selon la revendication 1, dans lequel ladite zone susceptible d'être atteinte par l'espèce à stocker est un aquifère situé au dessus de la formation du sous-sol dans lequel gaz est injecté, et l'on détecte une fuite de l'espèce à stocker hors de la formation d'injection au moyen dudit modèle de diffusion de l'espèce à stocker obtenu à l'étape vi.

4. Procédé selon la revendication 3, dans lequel on détecte la fuite de l'espèce à stocker avant qu'une augmentation de la concentration en l'espèce à stocker dans ledit aquifère ne soit détectable par mesures géochimiques.

5. Procédé selon l'une des revendications précédentes, dans lequel ladite espèce à stocker est du $CO_2$ ou du méthane.

6. Procédé selon l'une des revendications précédentes, dans lequel ledit gaz rare est de l'hélium ou de l'argon.

**Patentansprüche**

1. Verfahren zum geologischen Speichern von einem Gas, das eine zu speichernde Spezies und mindestens ein Edelgas umfasst, wobei das Gas in eine Formation des Untergrunds eingespritzt wird, **dadurch gekennzeichnet, dass** die Entwicklung der Spezies, die in dem Untergrund zu speichern ist, überwacht wird, indem die folgenden Schritte ausgeführt werden:

   i. es wird ein Diffusionsmodell des Edelgases und ein Diffusionsmodell der zu speichernden Spezies ausgewählt, wobei jedes Modell die Entwicklung der Konzentration in Abhängigkeit von der Zeit, der Tiefe und von einem Diffusionskoeffizienten des Gases beschreibt;
   ii. vor dem Einspritzen wird mindestens eine erste Probe einer Flüssigkeit entnommen, die in einem Bereich des Untergrunds vorhanden ist, der geeignet ist, von der zu speichernden Spezies erreicht zu werden, und es wird eine Konzentration des Edelgases in der ersten Probe gemessen;
   iii. nach dem Einspritzen wird mindestens eine zweite Probe einer Flüssigkeit entnommen, die in dem Bereich des Untergrunds vorhanden ist, der geeignet ist, von der zu speichernden Spezies erreicht zu werden, und es wird eine Konzentration des Edelgases in der zweiten Probe gemessen;
   iv. der Schritt iii wird zu verschiedenen Zeitpunkten wiederholt;
   v. wenn die Konzentration des Edelgases zunimmt, wird der tatsächliche Diffusionskoeffizient des Modells derart geändert, dass das Modell mit den Messungen kohärent ist, und es wird ein Verhältnis zwischen dem Diffusionskoeffizienten und dem geänderten Diffusionskoeffizienten abgeleitet;
   vi. dieses Verhältnis wird auf das Diffusionsmodell der zu speichernden Spezies angewendet, ausgehend von dem die Menge der zu speichernden Spezies bestimmt wird, die zu einem Zeitpunkt t diffundiert ist.

2. Verfahren nach Anspruch 1, wobei auch eine Konzentration der zu speichernden Spezies in der zweiten Probe gemessen wird und eine Menge der zu speichernden Spezies, die die chemische Form (durch chemische Reaktivität oder durch biologische Aktivität) zu einem Zeitpunkt t geändert hat, durch Vergleichen mit dem Diffusionsmodell der zu speichernden Spezies, das in dem Schritt vi erhalten wird, abgeleitet wird.

3. Verfahren nach Anspruch 1, wobei der Bereich des Untergrunds, der geeignet ist, von der zu speichernden Spezies erreicht zu werden, ein Aquifer ist, der über der Formation des Untergrunds liegt, in den Gas eingespritzt wird, und ein Ausströmen der zu speichernden Spezies aus der Einspritzformation mit Hilfe des Diffusionsmodells der zu speichernden Spezies, das in dem Schritt vi erhalten wird, ausfindig gemacht wird.

4. Verfahren nach Anspruch 3, wobei das Ausströmen der zu speichernden Art ausfindig gemacht wird, bevor ein Anstieg der Konzentration der zu speichernden Spezies in dem Aquifer durch geochemische Messungen ausfindig gemacht werden kann.

5. Verfahren nach einem der vorangehenden Ansprüche, wobei die zu speichernde Spezies $CO_2$ oder Methan ist.

6. Verfahren nach einem der vorangehenden Ansprüche, wobei das Edelgas Helium oder Argon ist.

**EP 2 500 513 B1**

**Claims**

1. A geological storage method for a gas containing a species to be stored and at least one noble gas, wherein said gas is injected into a subsurface formation, **characterized in that** the evolution of said species to be stored in the subsurface is monitored by carrying out the following stages:

   i. selecting a diffusion model for said noble gas and a diffusion model for the species to be stored, each model describing the concentration evolution as a function of time, of depth and of a diffusion coefficient of said gas;
   ii. prior to said injection, taking at least a first sample of a fluid present in a subsurface zone likely to be reached by the species to be stored and measuring a concentration of said noble gas within said first sample;
   iii. after said injection, taking at least a second sample of a fluid present in said subsurface zone likely to be reached by the species to be stored and measuring a concentration of said noble gas within said second sample;
   iv. repeating stage iii at different times;
   v. when said concentration of said noble gas increases, modifying said effective diffusion coefficient of the noble gas diffusion model so that the model is coherent with said measurements and deducing a ratio between said diffusion coefficient and said modified diffusion coefficient;
   vi. applying this ratio to the diffusion model of the species to be stored and determining therefrom an amount of species to be stored dissolved at a time t.

2. A method as claimed in claim 1, wherein a concentration of said species to be stored within said second sample is also measured and an amount of species to be stored that has changed its chemical form (by chemical reactivity or biological activity) at a time t is deduced therefrom by comparison with said diffusion model of the species to be stored obtained in stage vi.

3. A method as claimed in claim 1, wherein said zone likely to be reached by the species to be stored is an aquifer located above the subsurface formation into which the gas is injected and a leak of the species to be stored from the injection formation is detected by means of said diffusion model of the species to be stored obtained in stage vi.

4. A method as claimed in claim 3, wherein the leak of the species to be stored is detected before a concentration increase in the species to be stored in said aquifer is detectable by geochemical measurements.

5. A method as claimed in any one of the previous claims, wherein said species to be stored is $CO_2$ or methane.

6. A method as claimed in any one of the previous claims, wherein said noble gas is helium or argon.

11

**Fig. 1**

**Fig. 2**

**Fig. 3**

**Fig. 4**

CO2

$\alpha(z,t)C(z,t)$

t1    t2    t

**Fig. 5**

C/Co

He

SCO2

SHe    DEL    CO2

TDHe    TDCO2    t

**Fig. 6**

**EP 2 500 513 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2827960